# EUROPEAN PATENT APPLICATION

(11) **EP 3 412 599 A1**
(43) Date of publication of application: **12.12.2018**
(21) Application number: 17747526.6
(22) Date of filing: 02.02.2017
(51) Int. Cl.: B65D 77/20, B32B 27/00, B32B 27/32

(54) **RESEALABLE PACKAGING CONTAINER**

(30) Priority: 04.02.2016 JP 2016019449
(71) Applicant: Mitsui Chemicals, Inc., Minato-ku Tokyo 105-7122 (JP)
(72) Inventor: OKU Tatsuya, Ichihara-shi Chiba 299-0108 (JP); TANAKA Shinya, Ichihara-shi Chiba 299-0108 (JP); EGAWA Makoto, Ichihara-shi Chiba 299-0108 (JP)
(74) Representative: Hoffmann Eitle
(86) International application number: PCT/JP2017/003801
(87) International publication number: WO 2017/135375

(57) **Abstract**

[Problem] To provide a resealable packaging container having an excellent openability and resealability, and excellent in terms of food hygiene. [Solution] A resealable packaging container, which is a resealable package including a lid material that uses a multilayer film including three layers in which a substrate layer (A), an intermediate layer (B), and a heat seal layer (C) are laminated in the sequence (A)/(B)/(C); and a bottom material that uses a single-layer or multilayer sheet having an adherend (D) that can adhere to the heat seal layer (C), wherein the substrate layer (A), the intermediate layer (B), and the heat seal layer (C) all include a polyolefin resin, and when the heat seal layer (C) and the adherend (D) are heat-sealed to form a heat seal part, and the multilayer film is subsequently peeled from the heat seal part, the intermediate layer (B) and the heat seal layer (C) are delaminated and exposed in a resealable state.

## Description

### Technical Field

The present invention relates to a resealable packaging container, and specifically to a packaging container having a reseal function that is suitably used to package foods, pharmaceuticals, and the like.

### Background Art

Many foodstuffs and pharmaceuticals are packaged and stored in packaging containers each made of a flexible packaging material formed of a laminated film composed of one or more of a polymer film, paper, metal foil, and the like. Among such packaging materials, attention has been focused on resealable containers that can be repeatedly opened and resealed each time they are used. With the use of such a packaging container, if the packaging container is resealed immediately after use, a product stored in the packaging container can be protected from oxidation, moisture absorption, or degradation due to drying, leading to an extended lifetime of the product.

Patent Literature 1 discloses, as a resealable laminated film, a multilayer film comprising an outer layer, an intermediate layer including a hydrogenated product of a styrene-diene-based rubber block copolymer as a main component and a tackifier, and a heat seal layer, wherein when the multilayer film is peeled from a bottom material, the intermediate layer can be exposed at a heat seal part in a resealably adhered state. This multilayer film, however, is not preferable in terms of food hygiene, because the intermediate layer contains large amounts of the hydrogenated product of the rubber block copolymer as an essential component and the tackifier resin such as a rosin-based resin, a terpene resin, or a petroleum hydrocarbon resin as an essential component, which tends to increase the amount of n-heptane extracted. Furthermore, Patent Literature 2 discloses a multilayer film in which a substrate layer (A), an intermediate layer (B), a peel resin layer (C), and an adherend (D) are laminated in the sequence (A)/(B)/(C)/(D), wherein the intermediate layer (B) is a layer composed of a specific styrene-based thermoplastic elastomer as a main component, and the multilayer film can be resealed after the adherend (D) is heat-sealed in a heat seal part of an object to be sealed. In this patent literature, the styrene-based thermoplastic elastomer is used as an essential constituent component. Thus, if the container itself is heated, the amount of n-heptane eluted may exceed a reference value (according to the Notice of the Ministry of Health and Welfare No. 370 (Standards and criteria for food and food additives, etc.), when the usage temperature is not above 100°C, the reference value is 150 µg/mL or less, and when the usage temperature is above 100°C, the reference value is 30 µg/mL or less), which may limit the use. In other words, resealable containers are required that adapt to the lifestyle and eating habits in which foods packaged in containers are directly heated in a microwave oven or the foods are heated with steam, or automatic dishwashers that utilize hot water are used. The fact that a styrene-based thermoplastic elastomer such as SEBS may increase the amount of n-heptane extracted is also disclosed in Patent Literature 3 involving an application filed by the applicant of the present application.

### Citation List

### Patent Literature

Patent Literature 1: Japanese Patent Laid-Open No. 2003-175567
Patent Literature 2: Japanese Patent Laid-Open No. 2007-253395
Patent Literature 3: Japanese Patent Laid-Open No. 2013-23564

### Summary of Invention

### Technical Problem

It is a technical object of the present invention to provide a resealable packaging container having excellent openability and resealability, and excellent in terms of food hygiene.

### Solution to Problem

A summary of the present invention is as set forth below:
[1] A resealable packaging container, which is a resealable package comprising a lid material that uses a multilayer film including three layers in which a substrate layer (A), an intermediate layer (B), and a heat seal layer (C) are laminated in the sequence (A)/(B)/(C); and a bottom material that uses a single-layer or multilayer sheet having an adherend (D) that can adhere to the heat seal layer (C), wherein
   the substrate layer (A), the intermediate layer (B), and the heat seal layer (C) all comprise a polyolefin resin, and
   when the heat seal layer (C) and the adherend (D) are heat-sealed to form a heat seal part, and the multilayer film is subsequently peeled from the heat seal part, the intermediate layer (B) and the heat seal layer (C) are delaminated and exposed in a resealable state.
[2] The resealable packaging container according to [1], wherein the exposure of the intermediate layer (B) is effected at the heat seal part by breakage of the heat seal layer (C) from the multilayer film, delamination between the intermediate layer (B) and the heat seal layer (C), and transfer of the heat seal layer (C) to the adherend (D).
[3] The resealable packaging container according to [1] or [2], wherein the substrate layer (A) comprises a propylene-based polymer (P1) having a melting point (Tm), as measured using a differential scanning calorimeter (DSC), in the range of 120 to 170°C.
[4] The resealable packaging container according to [1] or [2], wherein the intermediate layer (B) comprises a propylene-based polymer (P2a) that satisfies the following requirements (a-1) and (a-2):
   (a-1) a melting point (Tm) as measured using a differential scanning calorimeter (DSC) is less than 120°C, or a melting point as measured using a DSC is not observed; and
   (a-2) a melt flow rate (MFR) as measured under a load of 2.16 kg at 230°C is 0.1 to 500 g/10 min.
[5] The resealable packaging container according to [1] or [2], wherein the heat seal layer (C) comprises a polyethylene (E1a) having a density of 890 to 960 kg/m³.
[6] The resealable packaging container according to [1] or [2], wherein the adherend (D) of an object to be sealed comprises a polyethylene (E2) having a density of 890 to 960 kg/m³.

### Advantageous Effects of Invention

The resealable packaging container of the present invention exhibits a negligible decrease in adhesive strength even after it is repeatedly opened and resealed, and is excellent in terms of hygiene even when it is used while heating, because it uses a minimal amount of or no styrene-based thermoplastic elastomer that raises a concern in terms of food hygiene, and it does not contain a petroleum resin or the like.

### Description of Embodiments

Hereinafter, embodiments of the present invention will be described in detail, using the drawings, as required. As used herein, the word "to" placed between one number and the other means not less than the one number and not more than the other, unless otherwise specified.

In general, according to the definitions set forth in JIS, the term "sheet" refers to a thin and flat product whose thickness is generally small relative to its length and width; on the other hand, the term "film" refers to a thin and flat product whose thickness is extremely small relative to its length and width, in which the maximum thickness is limited to a given thickness, and which is usually supplied in the form of a roll (Japanese Industrial Standards JIS K 6900). However, since the boundary between a sheet and a film is not clear, and there is no need to distinguish these terms in wording in the present invention, the term "film" shall include "sheet", and the term "sheet" shall include "film" in the present invention. Moreover, a laminated film and a laminated sheet may be collectively referred to as a "laminate". Furthermore, in the present invention, the term "main component" is defined as a component that usually constitutes 51 to 100 mass%, preferably 60 to 100 mass%, and more preferably 70 to 100 mass%, of the composition.

In a resealable packaging container according to an embodiment of the present invention, it is a resealable package in which a multilayer film in which a substrate layer (A), an intermediate layer (B), and a heat seal layer (C), all of which comprise a polyolefin-based polymer, are laminated in the sequence (A)/(B)/(C) is used as a lid material, and a single-layer or multilayer sheet (object to be sealed) having an adherend (D) that can adhere to the heat seal layer (C) is used as a bottom material. Hereinafter, each of the layers will be described in detail.

### Substrate Layer (A)

The substrate layer (A) is composed of a polyolefin-based resin, and is preferably composed of a propylene-based polymer (P1) having a melting point (Tm), as measured using a differential scanning calorimeter (DSC), in the range of 120 to 170°C, preferably 130 to 165°C. The melting point (Tm) is a value as measured by a re-heating method, as described below. In a preferred embodiment of the propylene-based polymer (P1), the propylene-based polymer (P1) further has a melt flow rate (MFR) (at 230°C under a load of 2.16 kg) of 0.1 to 500 g/10 min, preferably 0.1 to 100 g/10 min.

Such a propylene-based polymer (P1) may be a homopolypropylene, a random copolymer of propylene and an α-olefin having 2 to 20 carbon atoms (excluding propylene), or a propylene block copolymer, and is preferably a homopolypropylene or a random copolymer of propylene and an α-olefin having 2 to 20 carbon atoms (excluding propylene). Here, examples of the α-olefin having 2 to 20 carbon atoms other than propylene include ethylene, 1-butene, 1-pentene, 3-methyl-1-butene, 1-hexene, 4-methyl-1-pentene, 1-octene, and 1-decene. When the propylene-based polymer (P1) is a propylene/α-olefin random copolymer, it usually contains a constitutional unit derived from the α-olefin in an amount that is usually 0.1 to 8 mol%, preferably 0.2 to 7.5 mol%, and more preferably 0.3 to 7 mol%.

While the propylene-based polymer (P1) may have an isotactic structure or a syndiotactic structure as its stereochemical structure in terms of the performance of the laminated sheet, it preferably has an isotactic structure from the viewpoint of easy production of the polymer, or easy availability of commercially available products when they are used.

### Intermediate Layer (B)

The intermediate layer (B) comprises a polyolefin-based resin, preferably contains a propylene-based resin (P2), and more preferably comprises a propylene-based polymer (P2a) that satisfies the following requirements (a-1) and (a-2). The preferred intermediate layer (B) in the present invention comprises a propylene-based resin composed of 40 to 100 mass%, preferably 50 to 99 mass%, and more preferably 60 to 95 mass% of the propylene-based polymer (P2a); and 0 to 60 mass%, preferably 1 to 50 mass%, and more preferably 5 to 40 mass% of a propylene-based polymer (P2b) that satisfies both the following requirements (b-1) and (b-2) (here, the total amount of the component (P2a) and component (P2b) is 100 mass%):
(a-1) a melting point (Tm) as measured by the below-described general method using a differential scanning calorimeter (DSC) is less than 120°C, or a melting point as measured by the general method using a DSC is not observed;
(a-2) a melt flow rate (MFR) as measured under a load of 2.16 kg at 230°C is 0.1 to 500 g/10 min;
(b-1) a melting point (Tm) as measured by the below-described re-heating method using a differential scanning calorimeter (DSC) is 120 to 170°C, preferably 130 to 160°C; and
(b-2) a melt flow rate (MFR) (at 230°C under a load of 2.16 kg) is 0.1 to 500 g/10 min, preferably 0.1 to 100 g/10 min.

The intermediate layer (B) may also use a styrene-based elastomer in combination with the polyolefin-based resin as a main component, preferably the propylene-based resin (P2). When a styrene-based elastomer is used in combination, the proportion of the styrene-based elastomer is 49 mass% or less, preferably 40 mass% or less, based on the total mass of the intermediate layer (B) .

Examples of the styrene-based elastomer include a block copolymer (SBS) of a polystyrene block as a hard segment (crystalline segment) and a diene-based monomer block as a soft segment, a hydrogenated styrene/butadiene/styrene block (HSBR), a styrene/ethylene/propylene/styrene block copolymer (SEBS), a styrene/isobutylene/styrene copolymer (SIBS), and a styrene/isobutylene copolymer (SIB). Polystyrene-based elastomers are used alone or in combinations of two or more.

The styrene/ethylene/propylene/styrene block copolymer is a hydrogenated product of a styrene/isoprene/styrene block copolymer (SIS). Specific examples of SIS include commercial products sold by JSR Corporation under the trade name: JSR SIS (registered trademark), by Kuraray Co., Ltd. under the trade name: HYBRAR (registered trademark), and by Shell Company under the trade name: Kraton D (registered trademark).
Specific examples of SEPS include a commercial product sold by Kuraray Co., Ltd. under the trade name: SEPTON (registered trademark).

Specific examples of SIBS include a commercial product sold by KANEKA CORPORATION under the trade name: SIBSTAR (registered trademark).

In the preferred propylene-based resin (P2) to be used in the present invention, the propylene-based polymer (P2a) constituting the resin contains 51 to 90 mol%, preferably 60 to 89 mol%, more preferably 62 to 88 mol%, and particularly preferably 62 to 86 mol% of a constitutional unit derived from propylene; 7 to 24 mol%, preferably 8 to 22 mol%, more preferably 8 to 20 mol%, and particularly preferably 8 to 18 mol% of a constitutional unit derived from ethylene; and 0 to 25 mol%, preferably 0 to 24 mol%, more preferably 0 to 23 mol%, and particularly preferably 2 to 23 mol% of a constitutional unit derived from an α-olefin having 4 to 20 carbon atoms (here, the total amount of the constitutional unit derived from propylene, the constitutional unit derived from ethylene, and the constitutional unit derived from the α-olefin having 4 to 20 carbon atoms is 100 mol%). 1-Butene is preferably used as the α-olefin.

As the propylene-based polymer (P2b), which is the other constituent component of the propylene-based polymer (P2) in the present invention, the above-described propylene-based polymers (P1) can be used without limitation. The propylene-based polymer (P2b) and the propylene-based polymer (P1) may be exactly the same or different in terms of properties.

While both the propylene-based polymers (P2a) and (P2b) may have an isotactic structure or a syndiotactic structure as its stereochemical structure in terms of the performance of the laminated sheet, they preferably have an isotactic structure from the viewpoint of easy production of the polymer, or easy availability of commercially available products when they are used.

### Heat Seal Layer (C)

The heat seal layer (C) usually comprises a polyethylene (E1a) having a density of 890 to 960 kg/m³, and preferably comprises a polyethylene (E1a) having a density of 900 to 950 kg/m³. More preferably, an ethylene-based resin composition is used that is composed of 50 to 100 mass%, more preferably 55 to 99 mass% of the polyethylene (E1a); and 0 to 50 mass%, preferably 1 to 45 mass% of an ethylene-based polymer (E1b) having a density of 845 kg/m³ or more and less than 905 kg/m³, and preferably 850 kg/cm³ or more and less than 890 kg/m³ (here, the total amount of the component (E1a) and component (E1b) is 100 mass%).

The polyethylene (E1a) is preferably high-pressure process low-density polyethylene. More preferably, the polyethylene (E1a) has a melt flow rate (ASTM D1238, at 190°C under a load of 2.16 kg) of 0.1 to 50 g/10 min, preferably 1 to 20 g/10 min. The polyethylene (E1a) having a melt flow rate in this range is preferred because it has good moldability, and can suppress the neck-in phenomenon.

High-pressure process low-density polyethylene, which is a preferred embodiment of the polyethylene (E1a), is a multi-branched polyethylene resin having long-chain branches produced by radical polymerization of ethylene under high pressure in the presence of a radical polymerization initiator, in a known tubular reactor, an autoclave reactor, or the like. In high-pressure process low-density polyethylene, a small amount of another polymerizable monomer may be copolymerized as required. Examples of the polymerizable monomer include α-olefins having 3 to 10 carbon atoms, vinyl acetate, and acrylic acid esters. An ethylene homopolymer is preferably used as the polyethylene (E1a).

As the ethylene-based polymer (E1b), ethylene-based polymers can be used without limitation as long as they have a density of 845 kg/m³ or more and less than 890 kg/m³. Preferably, an ethylene/α-olefin copolymer containing 80 to 95 mol% of a constitutional unit derived from ethylene, and containing 5 to 20 mol% of a constitutional unit derived from an α-olefin having 3 to 20 carbon atoms (the total amount of ethylene and the α-olefin is 100 mol%) is used. The ethylene-based polymer (E1b) has a melt flow rate (ASTM D1238, at 190°C under a load of 2.16 kg) of 0.1 to 100 g/10 min. These ethylene-based polymers (E1b) may be used in combinations of two or more.

The α-olefin to be copolymerized with ethylene for the production of the ethylene-based polymer (E1b) is an α-olefin having 3 to 20 carbon atoms, and specific examples include propylene, 1-butene, 1-pentene, 1-hexene, 1-heptene, 1-octene, 1-nonene, 1-decene, 1-undecene, 1-dodecene, 1-hexadodecene, 1-octadecene, 1-nonadecene, 1-eicosene, and 4-methyl-1-pentene. Among the above, α-olefins having 3 to 10 carbon atoms are preferred. α-olefins having 4 to 8 carbon atoms are more preferred.
In particular, propylene, 1-butene, 4-methyl-1-pentene, 1-hexene, and 1-octene are preferred. In particular, these α-olefins are used alone or in combinations of two or more.

The ethylene-based polymer (E1b) has a crystallinity, as measured by X-ray diffraction, of usually 40% or less, preferably 0 to 39%, and more preferably 0 to 35%. Such an ethylene-based polymer (E1b) can be produced by a known method using a vanadium catalyst, a titanium catalyst, a metallocene catalyst, or the like.

### Adherend (D)

As the adherend (D) of the object to be sealed, which adheres to the heat seal layer (C), an ethylene-based polymer (E2) is preferably used. The ethylene-based polymer (E2) has a density of 890 to 960 kg/m³, and preferably 890 to 950 kg/m³. A known resin that is known as high-density polyethylene, high-pressure process low-density polyethylene, or linear low-density polyethylene is preferably used as the ethylene-based polymer (E2). The ethylene-based polymer (E2) may be a homopolyethylene composed of an ethylene-derived backbone only, or may be a copolymer composed of 70 mol% or more of an ethylene-derived backbone and 30 mol% or less of an α-olefin-derived backbone having 3 to 10 carbon atoms. The ethylene-based polymer (E1) has a melt flow rate, as measured at 190°C under a load of 2.16 kg, of usually 0.1 to 30 g/10 min, and preferably 0.5 to 20 g/10 min. The present invention in no way excludes an embodiment in which a multilayer sheet is formed by laminating an engineering plastic layer such as polyethylene terephthalate to be adjacent to a surface opposite to the surface of the adherend (D) to be adhered to the heat seal layer, as described below.

### Various Additives

The substrate layer (A), the intermediate layer (B), the heat seal layer (C), and the adherend (D) according to an embodiment of the present invention may contain, as optional components, known components blended into thermoplastic resin-based laminated films, such as an antioxidant, a heat stabilizer, a dye, a neutralizing agent, a discoloration inhibitor, a lubricant, an antiblocking agent, a plasticizer, a foaming agent, a foaming aid, a crosslinking agent, a crosslinking aid, a stabilizer, a crystal nucleating agent, an ultraviolet absorber, a hindered amine-based light stabilizer, an inorganic filler, an organic filler, an elastomer that imparts flexibility, and the like, as long as they do not impair the effects of the present invention. In a preferred embodiment, the substrate layer (A), the intermediate layer (B), the heat seal layer (C), and the adherend (D) contain one or more stabilizers selected from an ultraviolet absorber, a heat stabilizer, and a hindered amine-based light stabilizer. Usually, when the above-described additives are used in combination, the amount of the additives to be added is usually 0.005 to 5 parts by mass, and preferably 0.01 to 3 parts by mass, based on the total mass of each of the layers.

### Laminated Film (Lid Material)

As already stated, the laminated film for the lid material to be used in the present invention is a laminated film including, as an essential constituent sheet, a three-layer sheet in which the substrate layer (A), the intermediate layer (B), and the heat seal layer (C) are in direct contact with one another. In the present invention, the term "contact" refers to a structure obtained by laminating the layers to be in contact with one another, in which there is usually a significant adhesive force between surfaces in contact with each other.

In the present invention, the thickness of each of the substrate layer (A) and the intermediate layer (B) is usually 5 to 500 µm, preferably 10 to 300 µm, and more preferably 20 to 200 µm. The thickness of the heat seal layer (C) is usually 1 to 50 µm, preferably 2 to 30 µm, and more preferably 3 to 20 µm.

Examples of methods for producing the laminated film as the lid material to be used in the present invention include a method in which raw-material resins for the substrate layer (A), raw-material resins for the intermediate layer (B), and raw-material resins for the heat seal layer (C) are processed into a sheet, the method comprising a step in which the resins are individually fed into separate extruders, and after the respective raw-material resins are melted, the substrate layer (A), the intermediate layer (B), and the heat seal layer (C) are joined in this order to form a laminate, followed by extruding the laminate into a sheet through a T-die (co-extrusion method); a method in which a coating layer raw material is injected into an extruder, and while it is being extruded through an orifice by melt extrusion, it is laminated onto a sheet prepared from a single film (melt lamination method); a method in which each film is separately prepared, and the films are thermocompression bonded via a heated group of rolls (thermal lamination method); a method in which the raw-material resins dissolved in a solvent are applied and dried (coating method); and a combination of these methods. These methods can be used without limitation. Among the above, the co-extrusion method is preferred in that it has a short production process, and achieves good adhesion between the layers.

### Laminated Sheet (Bottom Material) and Package

The laminated sheet to be used as the bottom material of the container in the present invention may have any layer other than the adherend (D), as long as it has the adherend (D) capable of heat-sealing to the heat seal layer (C) of the lid material. Since the bottom material is filled with contents such as a food, the laminated sheet may be laminated with an engineering plastic layer for retaining the mechanical shape, or a metal layer having various barrier functions, represented by aluminum foil, for preventing the flavor of the contents from escaping, and imparting oxidation resistance and moisture resistance.

When such a laminated sheet is used as the bottom material of the package, a package having airtightness, practical peel strength, properties of not generating components harmful to health even upon heating, and a reseal function can be accomplished by laying the surface of the heat seal layer (C) of the laminated film for the lid material on the surface of the adherend (D) of the laminated sheet for the bottom material (object to be sealed) filled with contents such as a food, and by heat-sealing them.

When the heat seal layer (C) of the laminated film for the lid material to be used in the present invention is heat-sealed to the adherend (D) of the object to be sealed to form a heat seal part, and the multilayer film is subsequently peeled from the heat seal part, the exposure of the heat seal layer (C) is effected at the heat seal part by breakage of the heat seal layer (C) from the multilayer film, delamination between the intermediate layer (B) and the heat seal layer (C), and transfer of the broken heat seal layer (C) to the adherend (D) side of the object to be sealed. The conditions under which the multilayer film is peeled are, for example, as follows:
delamination speed: 300 m/min
delamination angle: 180°
temperature: room temperature (23°C)

Thus, preferably, an initial peel strength (peel strength at the time of initial peeling after the heat seal layer (C) is heat-sealed to the adherend (D) of the object to be sealed) is in the range of 3 N/15 mm width or more and 20 N/15 mm width or less, and preferably 5 N/15 mm width or more and 18 N/15 mm width. Here, when the interlayer peel strength is 3 N/15 mm width or more, inconveniences such as the package being easily opened by a weak impact are unlikely to occur. On the other hand, when the interlayer peel strength is 20 N/15 mm width or less, good ease of opening is achieved, i.e., the lid part of the package can be easily opened with a hand, which is preferable.

Next, with regard to the resealability after opening, for example, the pressure-sensitive adhesive strength (reseal peel strength) between the heat seal layer (C) and the intermediate layer (B) after repeatedly opening and resealing the package a total of five times, solely by pressure-bonding through application of pressure with a hand or a finger, is preferably 0.05 N/15 mm width or more. Here, when the reseal peel strength after repeatedly opening and resealing the package solely by pressure-bonding through application of pressure with a hand or a finger is 0.1 N/15 mm width or more, and preferably 0.2 N/15 mm width or more, practical resealability can be achieved, which is preferable.

Furthermore, a resealable packaging container according to another embodiment of the present invention is a resealable packaging container comprising a lid material that uses a multilayer film including three layers in which a substrate layer (A), an intermediate layer (B), and a heat seal layer (C) are laminated in the sequence (A)/(B)/(C); and a bottom material that uses a single-layer or multilayer sheet having an adherend (D) that can adhere to the heat seal layer (C), wherein the substrate layer (A) comprises a polyolefin-based resin, the intermediate layer (B) comprises the propylene-based polymer (P2a), and the heat seal layer (C) comprises the polyethylene (E1a).

In this resealable packaging container, when the heat seal layer (C) and the adherend (D) are heat-sealed to form a heat seal part, and the multilayer film is subsequently peeled from the heat seal part, the intermediate layer (B) and the heat seal layer (C) are delaminated and exposed in a resealable state.

The details of the embodiment of this resealable packaging container are the same as described above, except that the intermediate layer (B) contains the propylene-based polymer (P2a) as an essential component, and the heat seal layer (C) contains the polyethylene (E1a) as an essential component.

### Examples

Hereinafter, embodiments of the present invention will be described in more detail through a comparison between examples and a comparative example. The following examples are provided to facilitate the understanding of the present invention, and are not intended to limit the technical scope of the present invention.

### <Analytical Methods for the Raw Materials Used>

(1) Density: the density was measured at 23°C in accordance with ASTM D1505.
(2) Melt flow rate (MFR): the MFR was measured in accordance with ASTM D1238, at 190°C or 230°C under a load of 2.16 kg.
(3) Melting point (general method): A DSC curve was prepared by conducting measurement under the following conditions: a specimen after being conditioned at 23°C ± 2°C for 72 hours or more was cooled to -40°C, and then heated at a heating rate of 10°C/min. The melting peak temperature thus obtained was determined as the melting point (general method).
(4) Melting point (re-heating method): A DSC curve was prepared by conducting measurement under the following conditions: a specimen was held at 200°C for 10 minutes in a DSC measurement device, subsequently cooled to -20°C at a cooling rate of 10°C /min and held at -20°C for 1 minute, and then heated again at a heating rate of 10°C/min. The melting peak temperature thus obtained was determined as the melting point (re-heating method).

### <Sources of the Raw Materials Used or Preparation Method Thereof>

(1) Ethylene-based polymers
   - MIRASON™ 11P (high-pressure process low-density polyethylene manufactured by Mitsui Chemicals, Inc.; density: 917 kg/m³; MFR at 190°C: 7.2 g/10 min)
   - NEO-ZEX™ 0234N (linear low-density polyethylene manufactured by Prime Polymer Co., Ltd.; MFR at 190°C under a load of 2.16 kg: 2 g/10 min; density: 0.919 g/cm³; melting point: 120°C; butene content: 7 mass%)
   - TAFMER™ DF640 (ethylene/butene copolymer manufactured by Mitsui Chemicals, Inc.; density: 864 kg/m³; MFR at 230°C: 6.7 g/10 min; abbreviated as TF-1 in Table 1)
   - TAFMER™ A35070 (ethylene/butene copolymer manufactured by Mitsui Chemicals, Inc.; density: 870 kg/m³; MFR at 230°C: 65 g/10 min; abbreviated as TF-2 in Table 1)
   - TAFMER™ P0275 (ethylene/propylene copolymer manufactured by Mitsui Chemicals, Inc.; density: 861 kg/m³; MFR at 230°C: 5.4 g/10 min; abbreviated as TF-3 in Table 1)
(2) Propylene-based polymers
   - Prime Polypro™ F107 (propylene homopolymer manufactured by Prime Polymer Co., Ltd.; density: 900 kg/m³; MFR at 230°C: 7.0 g/10 min)
   - Propylene-based resin composition: a propylene-based resin composition was prepared in accordance with the method described in the EXAMPLES section of <Third Aspect of Invention> in the specification of the application filed by the applicant of the present application and already published as WO 2006/57361. As a result, a propylene-based resin composition was obtained that was composed of 15 mass% of a propylene homopolymer (corresponding to the propylene-based polymer (P2b) in the present invention) having a melting point (Tm), as measured by the re-heating method, of 160°C, and having an MFR, as measured at 230°C, of 7 g/10 min; and 85 mass% of a propylene/ethylene/1-butene copolymer (corresponding to the propylene-based polymer (P2a) in the present invention) having an ethylene-derived backbone content of 14 mol%, a propylene-derived backbone content of 67 mol%, and a 1-butene-derived backbone content of 19 mol%, having no Tm observed, as measured by the general method, and having an MFR, as measured at 230°C, of 7 g/10 min. Hereinafter, this composition may be abbreviated as the prepared PP composition.

### [Example 1]

Prime Polypro™ F107, which is a propylene homopolymer (abbreviated as hPP in the table) (resin for the substrate layer), the prepared PP composition (a resin composition for the intermediate layer), and MIRASON™ 11P, which is high-pressure process low-density polyethylene (abbreviated as HPLD in the table) (resin for the heat seal layer (C)) were each injected into a hopper of a co-extruder equipped with a T-die having a lip width of 1 mm (multilayer cast molding machine manufactured by Sumitomo Heavy Industries Modern, Ltd.). Then, at a cylinder temperature set at 240°C and a die temperature at 250°C, melt-kneaded products were coextruded through the T-die and cast-molded, thereby obtaining a laminated film (three-layer sheet) composed of a 40-µm-thick substrate layer (A), a 40-µm-thick intermediate layer (B), and a 10-µm-thick heat seal layer (C). This laminated film was used as a lid material of a package. As a bottom material, a NEO-ZEX 0234N sheet, which is linear low-density polyethylene (hereinafter abbreviated as LLDPE), serving as an adherend itself, was used for the simplification of the test.

### (Initial Peel Strength)

Subsequently, the films were laid on each other such that the heat seal layer (C) of the laminated film for the lid material and LLDPE as the adherend (D) for the bottom material were brought into contact with each other, and 50-µm-thick Teflon (registered trademark) sheets were used to sandwich the both surfaces of the films laid on each other to prepare a specimen. Subsequently, heat seal bars of a heat seal tester (model TB-701B manufactured by Tester Sangyo Co., Ltd.) were set to a width of 5 mm and a length of 300 mm, and the lower seal bar was adjusted to 170°C. The specimen was held between the heat seal bar parts, and heat-sealed for 1.0 second at a pressure of 0.2 MPa. The Teflon (registered trademark) sheets were removed, and the heat-sealed film part was allowed to stand at a room temperature of about 23°C for 1 day. A 15-mm-wide slit was made to include the heat-sealed part of the film, and the unsealed part was held in the chuck of a tensile testing machine ("IM-20ST manufactured by INTESCO Co., Ltd."). A 180° peel strength of the film at the time of peeling the lid material from the bottom material at a speed of 300 mm/min was measured. The above-described operation was repeated five times, and the average value of the maximum strengths was determined as the initial peel strength.

At the time of this peeling, initially, the heat seal layer (C) was broken near the interface between the non-heat seal part and the heat seal part; at the heat seal part, the heat seal layer (C) was transferred to the adherend (D), and simultaneously, the intermediate layer (B) was peeled from the heat seal layer (C) and exposed; and subsequently, near the interface between the heat seal part and the non-heat seal part, the heat seal layer (C) was broken, such that the heat seal part of the heat seal layer (C) was cut off, which caused the lid material to be separated from the adherend (D).

### (Reseal Peel Strength)

The intermediate layer and the heat seal layer opened as described above were pressure-bonded and resealed again with a finger, and then a (first) reseal peel strength was measured in the same manner as the method for measuring the initial peel strength described above. This opening/resealing operation was repeated five times, and the extent to which the reseal peel strength was maintained was evaluated. The results are shown in Table 1.

### [Examples 2 to 4 and Comparative Example 1]

For laminated films for lid materials having layer structures as set forth in Table 1, initial peel strengths and reseal peel strengths were measured in the same manner as the methods described in Example 1. The results are shown in Table 1.

**[Table 1]**

| | | | Example 1 | Example 2 | Example 3 | Example 4 | Comparative Example 1 |
|---|---|---|---|---|---|---|---|
| Lid Material | Substrate Layer (A) [40 µm] | | hPP | hPP | hPP | hPP | hPP |
| | Intermediate Layer (B) [40 µm] | | Prepared PP Composition | Prepared PP Composition | Prepared PP Composition | Prepared PP Composition | None |
| | Heat Seal Layer (C) [10 µm] | HPLD (wt%) | 100 | 85 | 85 | 85 | 100 |
| | | TF-1 (wt%) | | 15 | | | |
| | | TF-2 (wt%) | | | 15 | | |
| | | TF-3 (wt%) | | | | 15 | |
| Bottom Material | Adherend (D) | | LLDPE | LLDPE | LLDPE | LLDPE | LLDPE |
| Physical Property Measurement | Initial Peel Strength after Heat Seal at 170°C N/15 mm | | 11.52 | 14.95 | 13.23 | 12.99 | 8.88 |
| | Reseal Strength N/15 mm | First | 0.08 | 1.52 | 1.18 | 0.26 | 0 |
| | | Second | 0.05 | 0.66 | 0.61 | 0.14 | 0 |
| | | Third | 0.05 | 0.51 | 0.44 | 0.11 | 0 |
| | | Fourth | 0.05 | 0.44 | 0.29 | 0.11 | 0 |
| | | Fifth | 0.05 | 0.32 | 0.34 | 0.11 | 0 |

As is clear from the results in Table 1, it is seen that the initial interlayer peel strength is excellent, and a decrease in peel strength can be suppressed even after repeated opening and resealing with a finger, in the resealability test in which, in a multilayer film in which the substrate layer (A), the intermediate layer (B), and the heat seal layer (C), all of which comprise a polyolefin-based polymer, are laminated in the sequence (A)/(B)/(C), when the heat seal layer (C) and the adherend (D) are heat-sealed, and the multilayer film is subsequently peeled from the heat seal part, the intermediate layer (B) and the heat seal layer (C) are delaminated, and the intermediate layer (B) is exposed with the intermediate layer (B) and the heat seal layer (C) being in a resealable state. Thus, such a package is suitably used as packages of foods and the like that are repeatedly opened and resealed. Furthermore, since the package of the present invention does not contain a component, such as a styrene-based resin, that pushes up the amount of heptane extracted, it has a reduced risk on human health even if it is used to store foods and the like for a long period of time, or used while heating.

### Industrial Applicability

The present invention is suitably used as a resealable packaging container having excellent openability and resealability, and excellent in terms of food hygiene.

## Claims

1. A resealable packaging container, which is a resealable package comprising a lid material that uses a multilayer film including three layers in which a substrate layer (A), an intermediate layer (B), and a heat seal layer (C) are laminated in the sequence (A)/(B)/(C); and a bottom material that uses a single-layer or multilayer sheet having an adherend (D) that can adhere to the heat seal layer (C), wherein
the substrate layer (A), the intermediate layer (B), and the heat seal layer (C) all comprise a polyolefin resin, and
when the heat seal layer (C) and the adherend (D) are heat-sealed to form a heat seal part, and the multilayer film is subsequently peeled from the heat seal part, the intermediate layer (B) and the heat seal layer (C) are delaminated and exposed in a resealable state.

2. The resealable packaging container according to claim 1, wherein the exposure of the intermediate layer (B) is effected at the heat seal part by breakage of the heat seal layer (C) from the multilayer film, delamination between the intermediate layer (B) and the heat seal layer (C), and transfer of the heat seal layer (C) to the adherend (D).

3. The resealable packaging container according to claim 1 or 2, wherein the substrate layer (A) comprises a propylene-based polymer (P1) having a melting point (Tm), as measured using a differential scanning calorimeter (DSC), in the range of 120 to 170°C.

4. The resealable packaging container according to claim 1 or 2, wherein the intermediate layer (B) comprises a propylene-based polymer (P2a) that satisfies the following requirements (a-1) and (a-2):
(a-1) a melting point (Tm) as measured using a differential scanning calorimeter (DSC) is less than 120°C, or a melting point as measured using a DSC is not observed; and
(a-2) a melt flow rate (MFR) as measured under a load of 2.16 kg at 230°C is 0.1 to 500 g/10 min.

5. The resealable packaging container according to claim 1 or 2, wherein the heat seal layer (C) comprises a polyethylene (E1a) having a density of 890 to 960 kg/m³.

6. The resealable packaging container according to claim 1 or 2, wherein the adherend (D) of an object to be sealed comprises a polyethylene (E2) having a density of 890 to 960 kg/m³.
